# EUROPÄISCHE PATENTSCHRIFT

(11) **EP 3 490 285 B1**
(45) Veröffentlichungstag und Bekanntmachung des Hinweises auf die Patenterteilung: **26.08.2020**
(21) Anmeldenummer: 17203819.2
(22) Anmeldetag: 27.11.2017
(51) Int. Cl.: H04W 12/06, H04L 29/06

(54) **DRAHTLOSE KOMMUNIKATION MIT BENUTZERAUTHENTIFIZIERUNG**
WIRELESS COMMUNICATION WITH USER AUTHENTICATION
COMMUNICATION SANS FIL À FONCTION D'AUTHENTIFICATION DE L'UTILISATEUR

(43) Veröffentlichungstag der Anmeldung: 29.05.2019
(73) Patentinhaber: Siemens Aktiengesellschaft, 80333 München (DE)
(72) Erfinder: Fischer, Kai, 85598 Baldham (DE); Heintel, Markus, 81377 München (DE)

(56) Entgegenhaltungen:
- EP-A1- 3 244 645
- US-A1- 2017 102 903

## Beschreibung

Verfahren zur drahtlosen Kommunikation, insbesondere über Bluetooth, eines ersten Kommunikationsgeräts mit einem zweiten Kommunikationsgerät, wobei eine Authentifizierungsinformation eines Benutzers, einer Rolle oder einer Anwendung für die Authentifizierung der drahtlosen Verbindung genutzt wird.

In Automatisierungsanlagen ist üblicherweise eine Vielzahl von Feldgeräten verbaut und über Kommunikationsverbindungen miteinander verbunden. Oft sind die Geräte verstreut im Anlagennetz verbaut und nur schwer zugänglich. Eine Bedienung oder Wartung wird deshalb oft über Funkverbindung ermöglicht.

Dafür eignet sich besonders Bluetooth oder Bluetooth Low Energy. Bluetooth ist ein durch die Bluetooth Special Interest Group entwickelter Industriestandard nach IEEE 802.15.1 für die Funkübertragung über kurze Distanz. Bluetooth Low Energy, kurz BLE, zeichnet sich durch einen geringeren Stromverbrauch im Vergleich zum klassischen Bluetooth aus. Im Folgenden sind mit dem Begriff Bluetooth beide Funktechniken gemeint. Zum Schutz der Bluetooth-Funkschnittstelle werden kryptographische Protokolle eingesetzt, die über ein gemeinsames Geheimnis initialisiert werden. Dieser Prozess wird "Bluetooth Pairing" oder Bluetooth-Kopplung genannt. Die Prüfung des Geheimnisses erfolgt in der Regel über eine Eingabe von Ziffern, z.B. mittels einer Tastatur, oder über die Anzeige von Ziffern, z.B. Display, d.h. es ist ein direkter Zugriff auf das Gerät notwendig.

Wenn die Bluetooth-Schnittstelle eines Bluetooth-fähigen Geräts aktiviert ist, kann das Gerät bei einem sogenannten Bluetooth-Scan andere Bluetooth-fähige Geräte suchen und an diese eine Verbindungsanfrage senden. Eine kryptografisch geschützte Bluetooth-Verbindung kann beispielsweise durch das sogenannte Secure Simple Pairing nach dem Bluetooth-Standard 4.2 der Bluetooth Special Interest Group (https://www.bluetooth.com/specifications/bluetooth-corespecification) erreicht werden. Die Authentifizierung erfolgt dann z.B. mittels des Authentifizierungsprotokolls "Passkey Entry". Die Sicherheitsziele umfassen hierbei einen Schutz vor passiven Mithören und Man-in-the-middle-Angriffen.

Die Authentifizierung für eine sichere Bluetooth-Verbindung erfolgt auf Geräteebene, d.h. beim Pairing-Prozess wird nicht zwischen verschiedenen Benutzern unterschieden. Wenn mehrere Benutzer, z.B. verschiedene Personen oder Applikationen, dasselbe Gerät nutzen, muss für eine geschützte Datenübertragung eine weitere Authentifizierung auf Applikationsebene erfolgen. Es ist folglich ein weiterer Authentifizierungsschritt mit zusätzlichen Authentifizierungsinformationen notwendig, was bei Feldgeräten mit eingeschränkten Ressourcen zu einer Verzögerung der Datenübertragung führt. Üblicherweise erfordert eine Authentifizierung an einem Gerät typischerweise eine lokale Eingabe einer Authentifizierungsinformation, z.B. über eine Tastatur oder ein Display. Allerdings soll die lokale Bedienung gerade über die Ansteuerung über Funk, wie z.B. Bluetooth, vermieden werden, insbesondere für Feldgeräte, die über keine lokale Eingabe- oder Anzeigemöglichkeiten verfügen.

Aus EP 3 244 645 A1 ist ein Verfahren zum Bluetooth-Pairing bekannt, wobei in Abhängigkeit einer Benutzereingabe ein PIN-Code für das Pairing zweier Geräte von einer Datenbank abgefragt wird.

Es stellt sich somit die Aufgabe, eine einfache Möglichkeit zu schaffen, mit möglichst geringer Benutzerinteraktion zwei Geräte wechselseitig und einen Benutzer zu authentifizieren und eine Bluetooth-Verbindung einzurichten.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur drahtlosen Kommunikation eines ersten Kommunikationsgeräts mit einem zweiten Kommunikationsgerät, mit den Verfahrensschritten:
- Bereitstellen einer ersten Authentifizierungsinformation vom ersten Kommunikationsgerät, wobei die erste Authentifizierungsinformation für eine Authentifizierung eines Benutzers, einer Rolle oder einer Anwendung gültig ist,
- Übermitteln einer Anfrage zu einem Bluetooth-Verbindungsaufbau vom ersten Kommunikationsgerät an das zweite Kommunikationsgerät,
- Authentifizieren und Herstellen einer Bluetooth-Verbindung mittels der ersten Authentifizierungsinformation und einer zweiten Authentifizierungsinformation, die vom zweiten Kommunikationsgerät bereitgestellt wird, wenn mindestens ein Teil der ersten Authentifizierungsinformation mit einem Teil der zweiten Authentifizierungsinformation übereinstimmt
   und
- Aufbauen der Datenübertragung zwischen dem ersten Kommunikationsgerät und dem zweiten Kommunikationsgerät über die Bluetooth-Verbindung, wobei die Authentifizierung der Bluetooth-Verbindung die Authentifizierung eines Benutzers, einer Rolle oder einer Anwendung am zweiten Kommunikationsgerät einschließt.

Das Verfahren ist vorteilhaft, da insbesondere die Authentifizierung für die drahtlose Bluetooth-Verbindung und für die Datenübertragung über die Bluetooth-Verbindung anhand derselben ersten Authentifizierungsinformation erfolgt. Die Authentifizierung der Bluetooth-Verbindung schließt die Authentifizierung eines Benutzers, einer Rolle oder einer Anwendung am zweiten Kommunikationsgerät ein. In anderen Worten die Authentifizierung der Bluetooth-Verbindung umfasst die Authentifizierung eines Benutzers, einer Rolle oder einer Anwendung am zweiten Kommunikationsgerät. In anderen Worten, die Authentifizierung einer Datenübertragung, eines Benutzers, einer Rolle oder einer Anwendung am zweiten Kommunikationsgerät erfolgt implizit über die Authentifizierung der Bluetooth-Verbindung. Es ist vorzugsweise kein weiterer Authentifizierungsschritt auf Applikationsebene am zweiten Kommunikationsgerät notwendig. Die Bluetooth-Verbindung wird authentifiziert und hergestellt, wenn mindestens ein Teil der ersten Authentifizierungsinformation mit einem Teil der zweiten Authentifizierungsinformation übereinstimmt. Beispielsweise umfasst die Authentifizierungsinformation jeweils einen Benutzernamen und ein Passwort. Wenn insbesondere das Passwort der ersten Authentifizierungsinformation mit dem Passwort der zweiten Authentifizierungsinformation übereinstimmt, ist die Authentifizierung erfolgreich. Die erste und zweite Authentifizierungsinformation sind vorzugsweise für eine Authentifizierung eines Benutzers, einer Rolle oder einer Anwendung gültig. Eine Rolle oder auch Benutzerrolle umfasst eine Menge an Rechten einer Software oder in einem Betriebssystem, um z.B. mehreren Benutzern dieselben einzelnen Rechte zuzuweisen; einem Benutzer wird dann diese Rolle zugewiesen. Mit "Rolle" ist folglich hier auch "Benutzerrolle" gemeint. Der Aufbau der Bluetooth-Verbindung ist insbesondere ohne Benutzerinterkation am zweiten Kommunikationsgerät, z.B. ein Feldgerät, möglich und es wird vorzugsweise gleichzeitig mit dem Bluetooth-Pairing Prozess der zugreifende Benutzer bzw. seine Rolle auf Applikationsebene authentifiziert. Somit bestehen insbesondere für den Pairing-Prozess keine Anforderungen an die Eingabemöglichkeiten, z.B. eine Tastatur oder ein Display, des Feldgerätes oder dessen physikalische Erreichbarkeit. Das Verfahren nutzt vorzugsweise eine applikationsspezifische Authentifizierungsinformation. Dies ist möglich, da für die Authentifizierung der Bluetooth-Verbindung die erste Authentifizierungsinformation genutzt wird, welche erfindungsgemäß für die Authentifizierung des Benutzers, der Rolle oder der Anwendung gültig ist. Somit ist, in anderen Worten, insbesondere eine nachgelagerte Authentifizierung auf Applikationsebene nicht erforderlich.

Es kann beispielsweise für die wechselseitige Authentifizierung der Bluetooth-Verbindung die Authentifizierungsinformation genutzt werden, die für die Datenübertragung gültig ist. Die wechselseitige Authentifizierung der Kommunikationsgeräte auf Bluetooth-Ebene kann folglich die Authentifizierungsinformation der Applikationsebene nutzen, so dass insbesondere eine weitere Authentifizierung auf Applikationsebene entfällt. Die Daten können somit vorzugsweise direkt, d.h. ohne weiteren Authentifizierungsschritt auf Applikationsebene am zweiten Kommunikationsgerät, vom ersten Kommunikationsgerät zum zweiten Kommunikationsgerät übermittelt werden, sobald die Bluetooth-Verbindung authentifiziert ist. Dies wird dadurch beispielsweise ermöglicht, dass eine applikationsspezifische erste Authentifizierungsinformation benutzt wird, um die Authentifizierung für die Bluetooth-Verbindung durchzuführen. Das zweite Kommunikationsgerät stellt dazu beispielsweise eine zweite Authentifizierungsinformation bereit, die vom Benutzer, der Rolle oder der Anwendung abhängig ist.

Beispielsweise kann ein Benutzer des ersten Kommunikationsgeräts eine erste Authentifizierungsinformation, wie z.B. ein Passwort für eine Benutzeranmeldung am zweiten Kommunikationsgerät, eingeben. Dieses Passwort wird erfindungsgemäß für die Authentifizierung der Bluetooth-Verbindung genutzt. Dies ermöglicht beispielsweise, dass zwei Geräte eine Bluetooth-Verbindung aufbauen und gleichzeitig mit dem Prozess der Bluetooth-Kopplung den zugreifenden Benutzer auf Applikationsebene authentifizieren können. So können mehrere Benutzer- bzw. Anwenderrollen insbesondere mit unterschiedlichen Passwörtern pro Gerät unterstützt werden. Die Authentifizierung auf Applikationsebene erfolgt vorzugsweise bereits während der Bluetooth-Authentifizierung. Es ist vorzugsweise folglich nur ein Authentifizierungsschritt notwendig, um die Bluetooth-Verbindung und eine Datenverbindung darüber herzustellen, da bereits die erste Authentifizierungsinformation, die für die Bluetooth-Kopplung benutzt wird, Sicherheitsinformationen für die Datenübertragung umfasst.

Die wechselseitige Authentifizierung für die Bluetooth-Verbindung erfolgt hierbei vorzugsweise über ein Authentifizierungsprotokoll, wie z.B. "Passkey Entry". Die Authentifizierung erfolgt insbesondere erfindungsgemäß basierend auf einer bereits existierenden applikationsspezifischen Authentifizierungsinformation, so dass eine nachgelagerte Authentifizierung auf Applikationsebene über den etablierten Bluetooth-Kanal nicht mehr notwendig ist. Rechenintensive Berechnungen können beispielsweise in der Hardware eines Bluetooth-Chips durchgeführt werden, so dass sich die Anforderungen an die Leistung des Hauptprozessors durch die Benutzerauthentifizierung nicht erhöhen. Das Verfahren kann somit insbesondere auch auf ressourcenschwachen Feldgeräten umgesetzt werden.

In einer vorteilhaften Ausführungsform des Verfahrens umfassen die erste Authentifizierungsinformation und die zweite Authentifizierungsinformation jeweils mindestens eine Identifikationsinformation und eine Sicherheitsinformation.

Die erste und die zweite Authentifizierungsinformation können jeweils beispielsweise einen Benutzernamen als Identifikationsinformation und ein benutzerspezifisches Passwort als Sicherheitsinformation umfassen. Die Identifikationsinformation und die Sicherheitsinformation sind demnach insbesondere abhängig voneinander und können beispielsweise paarweise vorliegen. Insbesondere wenn das Passwort des ersten Kommunikationsgeräts mit dem des zweiten Kommunikationsgeräts übereinstimmt, kann eine wechselseitige Authentifizierung erfolgreich durchgeführt werden.

In einer weiteren vorteilhaften Ausführungsform des Verfahrens wird die zweite Authentifizierungsinformation in einer Datenbank gespeichert.

Das zweite Kommunikationsgerät kann vorzugsweise eine Datenbank umfassen oder mit einer Datenbank verbunden sein. Die Datenbank kann beispielsweise mehr als eine zweite Authentifizierungsinformation, jeweils umfassend mindestens eine Identifikationsinformation und eine Sicherheitsinformation, bereitstellen. Die zweite Authentifizierungsinformation des zweiten Kommunikationsgeräts kann beispielsweise geändert werden. So kann das zweite Kommunikationsgerät beispielsweise verschiedene zweite Authentifizierungsinformationen bereitstellen. Wenn zum Beispiel das erste Kommunikationsgerät von verschiedenen Benutzern bedient wird, welche jeweils unterschiedliche Passwörter haben, kann das zweite Kommunikationsgerät mittels der Datenbank abhängig vom Benutzer eine zweite Authentifizierungsinformation bereitstellen.

In einer weiteren vorteilhaften Ausführungsform des Verfahrens wird die erste Identifikationsinformation des ersten Kommunikationsgeräts dem zweiten Kommunikationsgerät vor oder während des Bluetooth-Verbindungsaufbaus übermittelt und das zweite Kommunikationsgerät stellt anhand der Identifikationsinformation der ersten Authentifizierungsinformation eine zweite Authentifizierungsinformation bereit.

Vorzugsweise wird dem zweiten Kommunikationsgerät vor oder während des Bluetooth-Verbindungsaufbaus ein Teil der ersten Authentifizierungsinformation, z.B. die Identifikationsinformation, übergeben. Beispielsweise kann der Benutzername eines Benutzers als Teil des Bluetooth-Gerätenamens des ersten Kommunikationsgeräts dem zweiten Kommunikationsgerät angezeigt werden. Somit ist dem zweiten Kommunikationsgerät insbesondere bekannt, welcher Benutzer sich am zweiten Kommunikationsgerät authentifizieren möchte. Um den Aufbau der Bluetooth-Verbindung wechselseitig zu authentifizieren, stellt das zweite Kommunikationsgerät insbesondere eine zweite Authentifizierungsinformation abhängig von der Identifikationsinformation der ersten Authentifizierungsinformation bereit. Beispielsweise kann für jeden Benutzer eine entsprechende zweite Authentifizierungsinformation in einer Datenbank des zweiten Kommunikationsgeräts hinterlegt sein.

In einer weiteren vorteilhaften Ausführungsform des Verfahrens wird die zweite Identifikationsinformation des zweiten Kommunikationsgeräts dem ersten Kommunikationsgerät übermittelt und das erste Kommunikationsgerät stellt anhand der Identifikationsinformation der zweiten Authentifizierungsinformation eine erste Authentifizierungsinformation bereit.

Das zweite Kommunikationsgerät kann beispielsweise derart konfiguriert sein, dass es eine Identifikationsinformation bereitstellt, die einem bestimmten Benutzer oder einer Rolle des ersten Kommunikationsgeräts entspricht. Beispielsweise kann das zweite Kommunikationsgerät verschiedene Benutzerrollen annehmen und diese auch wechseln. Zum Beispiel kann das zweite Kommunikationsgerät ein Feldgerät sein, das nur von ausgewählten Benutzern via Bluetooth angesteuert werden kann. Die Identifikationsinformation der zweiten Authentifizierungsinformation, z.B. eine Rolle des zweiten Kommunikationsgeräts, kann beispielsweise ebenso fest eingestellt sein. Das zweite Kommunikationsgerät übermittelt dem ersten Kommunikationsgerät seine Identifikationsinformation, zum Beispiel als Teil seines Bluetooth-Gerätenamens. Außerdem stellt es eine Sicherheitsinformation, wie z.B. ein Passwort, bereit. Bei einem Bluetooth-Scan in der Umgebung, bei dem ein Gerät andere Bluetooth-fähige Gerät sucht, kann das erste Kommunikationsgerät diese Informationen empfangen und eine entsprechende erste Authentifizierungsinformation, z.B. Benutzername und Passwort, bereitstellen. Insbesondere bei Übereinstimmung der ersten und zweiten Sicherheitsinformation werden die beiden Kommunikationsgeräte wechselseitig authentifiziert und es kann eine Bluetooth-Verbindung aufgebaut werden. Eine nachgelagerte Authentifizierung des Benutzers ist vorzugsweise nicht mehr notwendig.

In einer weiteren vorteilhaften Ausführungsform des Verfahrens ist die Sicherheitsinformation der ersten Authentifizierungsinformation fest vorgegeben und die Bluetooth-Verbindung wird authentifiziert und hergestellt, sobald eine Sicherheitsinformation der zweiten Authentifizierungsinformation mit der Sicherheitsinformation der ersten Authentifizierungsinformation übereinstimmt.

Es kann beispielsweise die Identifikationsinformation und Sicherheitsinformation eines ersten Kommunikationsgeräts fest eingestellt sein oder nicht flexibel konfigurierbar sein. Für eine erfolgreiche Authentifizierung zweier Kommunikationsgeräte muss mindestens ein Teil der ersten mit mindestens einem Teil der zweiten Authentifizierungsinformation übereinstimmen. Beispielsweise kann durch mehrmaliges Bereitstellen der zweiten Authentifizierungsinformation, insbesondere der Sicherheitsinformation, so lange probiert werden, bis die eine wechselseitige Authentifizierung möglich ist. Das zweite Gerät probiert beispielsweise verschiedene Rollen durch, bis es zu einer Übereinstimmung kommt.

In einer weiteren vorteilhaften Ausführungsform des Verfahrens wird bei einer Nichtübereinstimmung der Sicherheitsinformation der ersten Authentifizierungsinformation mit der Sicherheitsinformation der zweiten Authentifizierungsinformation die Bluetooth-Verbindung nicht aufgebaut und eine erneute Anfrage zu einem Bluetooth-Verbindungsaufbau übermittelt.

Wenn beispielsweise das zweite Kommunikationsgerät nicht die entsprechend passende zweite Sicherheitsinformation zur ersten Sicherheitsinformation bereitstellt, kann keine Bluetooth-Verbindung zustande kommen. Gemäß dem Verfahren wird daraufhin vorzugsweise eine erneute Anfrage zu einem Bluetooth-Verbindungsaufbau übermittelt. Um in effizienter Weise verschiedene Authentifizierungsinformationen derart zu prüfen, können vorzugsweise die Authentifizierungsinformationen eines Kommunikationsgeräts hierarchisch entsprechend ihrer Privilegierungsebenen geordnet übergeprüft werden. Die Privilegierungsebene kann z.B. anhand der Zuständigkeit eines Benutzers festgelegt werden. Eine Privilegierungsebene kann beispielsweise verschiedene Berechtigungen von einem Benutzer oder einer Rolle beschreiben.

Gemäß einem weiteren Aspekt betrifft die Erfindung ein erstes Kommunikationsgerät, umfassend:
- eine erste Authentifizierungseinheit, die derart ausgebildet ist, eine erste Authentifizierungsinformation bereitzustellen, wobei die erste Authentifizierungsinformation für eine Authentifizierung eines Benutzers, einer Rolle oder einer Anwendung gültig ist,
- eine erste Kommunikationseinheit, die derart ausgebildet ist, eine Anfrage zu einem Bluetooth-Verbindungsaufbau an ein zweites Kommunikationsgerät zu übermitteln,
- eine erste Schnittstelle, die derart ausgebildet ist eine Bluetooth-Verbindung zum zweiten Kommunikationsgerät zu authentifizieren und herzustellen, wenn mindestens ein Teil der ersten Authentifizierungsinformation mit einem Teil der zweiten Authentifizierungsinformation übereinstimmt, und eine Datenübertragung zum zweiten Kommunikationsgerät aufzubauen,
wobei die Datenübertragung über die Bluetooth-Verbindung erfolgt und wobei die Authentifizierung der Bluetooth-Verbindung die Authentifizierung eines Benutzers, einer Rolle oder einer Anwendung am zweiten Kommunikationsgerät einschließt.

Ein erstes Kommunikationsgerät mit diesen Merkmalen ist vorteilhaft, da beispielsweise eine erste Authentifizierungsinformation in das Kommunikationsgerät eingegeben werden kann, die für die Authentifizierung auf Geräteebene, d.h. für die Bluetooth-Verbindung, und auf Applikationsebene benutzt werden kann. Somit ist vorzugsweise nur ein Authentifizierungsschritt notwendig. Beispielsweise kann ein Benutzer einen Benutzernamen und ein Passwort, mit dem er sich auf einem zweiten Kommunikationsgerät authentifiziert eingeben. Diese Authentifizierungsinformation wird insbesondere zur Authentifizierung der Bluetooth-Verbindung genutzt. Das erfindungsgemäße Kommunikationsgerät erlaubt somit beispielsweise die Nutzung einer Benutzerauthentifizierung zur Authentifizierung einer Bluetooth-Verbindung. Rechenintensive Berechnungen können insbesondere in der Hardware des ersten Kommunikationsgeräts stattfinden.

Gemäß einem weiteren Aspekt betrifft die Erfindung ein zweites Kommunikationsgerät umfassend:
- eine zweite Authentifizierungseinheit, die derart ausgebildet ist, eine zweite Authentifizierungsinformation bereitzustellen,
- eine zweite Kommunikationseinheit, die derart ausgebildet ist, eine Anfrage zum Bluetooth-Verbindungsaufbau von einem ersten Kommunikationsgerät zu empfangen,
- eine zweite Schnittstelle, die derart ausgebildet ist eine Bluetooth-Verbindung zum ersten Kommunikationsgerät zu authentifizieren und herzustellen, wenn mindestens ein Teil einer ersten Authentifizierungsinformation vom ersten Kommunikationsgerät, die für eine Authentifizierung eines Benutzers, einer Rolle oder einer Anwendung gültig ist, mit einem Teil der zweiten Authentifizierungsinformation übereinstimmt, und eine Datenübertragung zum ersten Kommunikationsgerät aufzubauen.

Dieses zweite Kommunikationsgerät ist vorteilhaft, da damit eine erste Authentifizierungsinformation eines ersten Kommunikationsgeräts so genutzt werden kann, eine Bluetooth-Verbindung zu authentifizieren und herzustellen und implizit eine Datenübertragung auf Applikationsebene zu authentifizieren. Wenn beispielsweise das zweite Kommunikationsgerät keine Eingabemöglichkeit hat, kann auf diese Weise ein Passwort für die Authentifizierung auf Geräteebene und auf Applikationsebene benutzt werden. Es muss beispielsweise lediglich ein dem Benutzer, der Rolle oder der Anwendung entsprechendes Passwort im zweiten Kommunikationsgerät bereitgestellt werden, um die Bluetooth-Verbindung nach erfolgreicher wechselseitiger Authentifizierung aufzubauen. Rechenintensive Berechnungen können insbesondere in der Hardware des zweiten Kommunikationsgeräts stattfinden. Durch die gekoppelte Benutzerauthentifizierung erhöht sich insbesondere die Belastung des Hauptprozessors des zweiten Kommunikationsgeräts nicht bzw. es ergibt sich keine erhöhte Rechenlast.

In einer vorteilhaften Ausführungsform umfasst das zweite Kommunikationsgerät eine Datenbank, wobei die Datenbank derart ausgebildet ist, mindestens eine zweite Authentifizierungsinformation zu speichern.

Gemäß einem weiteren Aspekt betrifft die Erfindung ein System umfassend ein erstes Kommunikationsgerät, ein zweites Kommunikationsgerät und eine drahtlose Kommunikationsverbindung über Bluetooth zwischen dem ersten Kommunikationsgerät und dem zweiten Kommunikationsgerät. Das erste Kommunikationsgerät und zweite Kommunikationsgerät können wie oben beschrieben gestaltet sein. Das System ist derart ausgebildet die Verfahrensschritte, wie oben beschrieben, durchzuführen.

Ein weiterer Aspekt der Erfindung betrifft ein Computerprogrammprodukt, das direkt in einen programmierbaren Computer ladbar ist, umfassend Programmcodeteile, die dazu geeignet sind, die Schritte des Verfahrens durchzuführen.

Ausführungsbeispiele des erfindungsgemäßen Verfahrens, des ersten Kommunikationsgeräts, des zweiten Kommunikationsgeräts und des Systems sind in den Zeichnungen beispielhaft dargestellt und werden anhand der nachfolgenden Beschreibung näher erläutert. Das Verfahren ist vorzugsweise rechnergestützt realisiert. Außerdem weisen die folgenden Ausführungsbeispiele, die insbesondere nur einige der möglichen Realisierungsmöglichkeiten darstellen, zumindest eine Speichereinheit und/oder Prozessor auf, um das Verfahren zu implementieren oder auszuführen. Es zeigen:
- Fig. 1: ein erstes Ausführungsbeispiel des erfindungsgemäßen Verfahrens als Sequenzdiagramm;
- Fig. 2: ein zweites Ausführungsbeispiel des erfindungsgemäßen Verfahrens als Sequenzdiagramm;
- Fig. 3: ein drittes Ausführungsbeispiel des erfindungsgemäßen Verfahrens als Sequenzdiagramm;
- Fig. 4: eine schematische Darstellung des erfindungsgemäßen ersten Kommunikationsgeräts;
- Fig. 5: eine schematische Darstellung des erfindungsgemäßen zweiten Kommunikationsgeräts;
- Fig. 6: eine schematische Darstellung des erfindungsgemäßen Systems.

Einander entsprechende Teile sind in allen Figuren mit den gleichen Bezugszeichen versehen.

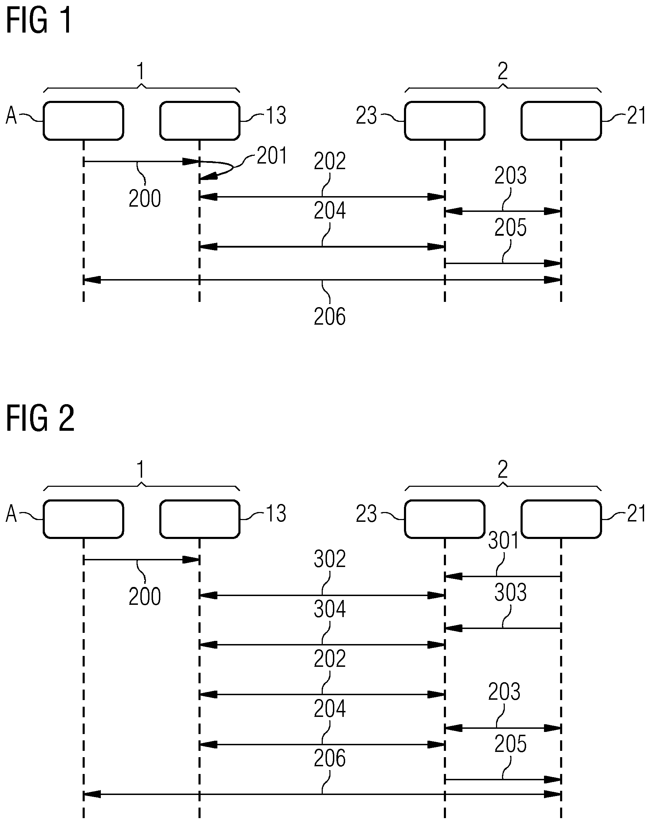

Ein erstes Ausführungsbeispiel des erfindungsgemäßen Verfahrens zum Aufbau einer drahtlosen Kommunikationsverbindung, z.B. über Bluetooth oder Bluetooth Low Energy, zwischen einem ersten Kommunikationsgerät 1 und einem zweiten Kommunikationsgerät 2 ist im Sequenzdiagramm in Figur 1 dargestellt.

Das erste Kommunikationsgerät 1 kann beispielsweise ein tragbarer Tablet-Computer mit einer erfindungsgemäßen ersten Bluetooth-Schnittstelle 13 sein, der von einem Benutzer A benutzt wird, um das zweite Kommunikationsgerät anzusteuern. Es soll eine Bluetooth-Verbindung nach dem erfindungsgemäßen Verfahren mit dem zweiten Kommunikationsgerät 2 mit einer zweiten Bluetooth-Schnittstelle 23 aufgebaut werden. Demnach wird für die Authentifizierung der Bluetooth-Verbindung eine applikationsspezifische Sicherheitsinformation, d.h. zum Beispiel ein für einen Benutzer, eine Rolle oder Anwendung gültiges Passwort, genutzt.

Das zweite Kommunikationsgerät 2 kann beispielsweise ein Feldgerät sein. Das erste Kommunikationsgerät 1 soll über eine Bluetooth-Verbindung Daten mit dem zweiten Kommunikationsgerät 2 austauschen. Beispielsweise soll ein Benutzer A des Computer-Tablets das zweite Kommunikationsgerät 2 steuern, wobei dabei eine Datenübertragung über Bluetooth stattfindet. Der Benutzer A muss sich für die Steuerung des Feldgeräts, sobald eine Bluetooth-Verbindung aufgebaut ist, auf dem Feldgerät authentifizieren. Dieses Szenario ist beispielhaft für industrielle Großanlagen, wo Feldgeräte über Bluetooth angesteuert werden. Dabei sind Feldgeräte oft nicht mit Eingabemöglichkeiten, wie z.B. Displays, ausgestattet, so dass Authentifizierungsinformationen, wie z.B. Passwörter, dort nicht direkt eingegeben werden können. Im Stand der Technik würden aber beispielsweise für die Steuerung eines Feldgeräts über Bluetooth mindestens zwei Authentifizierungsschritte notwendig sein: erstens eine wechselseitige Authentifizierung der beiden Kommunikationsgeräte für den Bluetooth-Verbindungsaufbau auf Geräteebene und zweitens eine Authentifizierung des Benutzers am Feldgerät auf Applikationsebene, um z.B. eine Anwendung ausführen zu können. Die lokale Bedienung über eine Tastatur oder ein Display ist oft bei Feldgeräten nicht möglich oder soll gerade durch die Fernsteuerung über Bluetooth vermieden werden. Mittels des erfindungsgemäßen Verfahrens wird eine einfach Möglichkeit geschaffen, die Authentifizierungsinformation zur Authentifizierung einer Anwendung dem Feldgerät für die Authentifizierung der Bluetooth-Verbindung zu nutzen. Folglich ist keine weitere direkte Eingabe der Authentifizierungsinformation am zweiten Kommunikationsgerät 2 erforderlich. Die Authentifizierung des Benutzers A, oder einer Rolle oder einer Anwendung oder einer Softwarekomponente, erfolgt implizit bzw. automatisch über die Authentifizierung der Bluetooth-Verbindung.

Nach dem erfindungsgemäßen Verfahren, welches in einer Ausführungsform in Figur 1 gezeigt ist, ist für das Herstellen einer Bluetooth-Verbindung und den Austausch von Daten über diese Verbindung, die Eingabe einer ersten Authentifizierungsinformation im ersten Kommunikationsgerät 1 ausreichend. Die Schritte des Verfahrens in diesem ersten Ausführungsbeispiel sind im Sequenzdiagramm von oben nach unten in zeitlicher Reihenfolge dargestellt und sind im Detail wie folgt:
Zunächst stellt die Authentifizierungseinheit 11 des ersten Kommunikationsgeräts 1 eine erste Authentifizierungsinformation bereit. Das erste Kommunikationsgerät 1 umfasst dabei eine erste Bluetooth-Schnittstelle 13. Beispielsweise kann das erste Kommunikationsgerät 1 ein Tablet sein, welches von einem Benutzer A bedient wird, der die erste Authentifizierungsinformation über ein Display eingibt. Üblicherweise hat ein Bluetooth-fähiges Gerät einen Bluetooth-Namen zugeordnet, an welchem es bei einem Bluetooth-Scan für andere Geräte erkennbar ist. Für den Verbindungsaufbau via Bluetooth zu einem anderen Gerät wird eine Authentifizierungsinformation, z.B. ein Bluetooth-Passwort, benötigt. Nach dem erfindungsgemäßen Verfahren wird hierbei die erste Authentifizierungsinformation des Benutzers A genutzt, z.B. ein Benutzer-Passwort. Erfindungsgemäß kann das Benutzer-Passwort als Bluetooth-Passwort verwendet oder konfiguriert werden. Dazu wird das Benutzer-Passwort im Schritt 200 in das erste Kommunikationsgerät 1 eingegeben. Mit diesem ersten Verfahrensschritt wird die erste Authentifizierungsinformation, die mindestens eine Identifikationsinformation, z.B. Name des Benutzers oder ein Zertifikat, und eine Sicherheitsinformation, wie z.B. das Benutzer-Passwort, umfasst, vom ersten Kommunikationsgerät 1 bereitgestellt.

Im nächsten Schritt 201 wird der Bluetooth-Gerätename des ersten Kommunikationsgeräts 1 so konfiguriert, das er Informationen über den Benutzer A umfasst. Anhand der Identifikationsinformation des Benutzers A wird der Bluetooth-Gerätename des Kommunikationsgeräts 1 so konfiguriert, dass die Zuordnung des Benutzers A zu diesem Kommunikationsgerät eindeutig ist. Der Bluetooth-Gerätename eines Geräts kann üblicherweise dynamisch eingestellt werden, z.B. dynamisch durch die vom Benutzer einzugebenden Login-Daten oder durch einen fest vorgegebenen Benutzer oder eine Rolle. Neben dem Benutzernamen können auch andere Informationen, die in der Authentifizierungseinheit 11 des ersten Kommunikationsgeräts 1 hinterlegbar sind, genutzt werden, um das erste Kommunikationsgerät 1 anhand des Benutzers A zu kennzeichnen. Diesem Verfahrensschritt 201 kann ein Bluetooth-Scan folgen, wobei das Bluetooth-fähige erste Kommunikationsgerät die Umgebung nach anderen Geräten absucht, mit denen eine Bluetooth-Verbindung hergestellt werden kann.

Im nächsten Schritt 202 empfängt das zweite Kommunikationsgerät 2, das eine zweite Bluetooth-Schnittstelle 23 umfasst, die Anfrage zum Bluetooth-Verbindungsaufbau vom ersten Kommunikationsgerät 1. Beim Bluetooth-Verbindungsaufbau bekommt das zweite Kommunikationsgerät 2 den Bluetooth-Gerätenamen des ersten Kommunikationsgeräts 1 mitgeteilt. Anhand des Bluetooth-Gerätenamens des ersten Kommunikationsgeräts 1 kann für das zweite Kommunikationsgerät 2 dabei ersichtlich sein, durch welchen Benutzer das Gerät benutzt wird. In anderen Worten, dem zweiten Kommunikationsgerät wird mitgeteilt, welcher Benutzer, Rolle oder Anwendung das erste Kommunikationsgerät zugeordnet ist. In anderen Worten, dem Bluetooth-Stack eines Feldgeräts wird dann entsprechend des Bluetooth-Gerätenamens die entsprechende Benutzer/Rollen-Authentifizierungsinformation übergeben.

Die zweite Authentifizierungseinheit 21 des zweiten Kommunikationsgeräts 2 stellt eine zweite Authentifizierungsinformation bereit, Schritt 203. Die zweite Authentifizierungsinformation kann dabei insbesondere vom Benutzer A des ersten Kommunikationsgeräts 1 abhängig sein. Bei der Verbindungsanfrage übermittelt das erste Kommunikationsgerät 1 seine Identifikationsinformation, z.B. mit einem vom Benutzer A abhängigen Bluetooth-Gerätenamen, dem zweiten Kommunikationsgerät 2. Anhand dieser im Bluetooth-Gerätenamen enthaltenen, ersten Identifikationsinformation kann das zweite Kommunikationsgerät 2 eine entsprechende zweite Authentifizierungsinformation bereitstellen. Dazu nimmt das zweite Kommunikationsgerät 2 beispielsweise eine Rolle an, die abhängig vom Benutzer A ist. In anderen Worten, das zweite Kommunikationsgerät 2 kann gemäß einer Rolle konfiguriert werden. Beispielsweise sind in einer Datenbank, die mit dem zweiten Kommunikationsgerät verbunden sein kann, für verschiedene Benutzer oder Rollen oder Anwendungen entsprechende zweite Authentifizierungsinformationen gespeichert. Es ist dabei vorteilhaft, dass das zweite Kommunikationsgerät 2 diejenige zweite Authentifizierungsinformation bereitstellt, die zu dem Benutzer A oder der Rolle des ersten Kommunikationsgeräts 1 passt. Beispielsweise kann in einer Datenbank eine Liste an Namen von Benutzern mit zugeordneten Passwörtern vorhanden sein, so dass das zweite Kommunikationsgerät 2 anhand der vom ersten Kommunikationsgerät 1 übermittelten Identifikationsinformation, wie z.B. Name eines Benutzers, die entsprechende zweite Authentifizierungsinformation bereitstellen kann. Es wird beispielweise die Benutzerauthentifizierungsinformation für die Bluetooth-Authentifizierung genutzt.

Um das erste Kommunikationsgerät 1 mit dem zweiten Kommunikationsgerät 2 über Bluetooth zu verbinden, wird von beiden Kommunikationsgeräten eine sich entsprechende erste und zweite Sicherheitsinformation, wie z.B. ein Passwort, benötigt. Das zweite Kommunikationsgerät 2 gibt folglich vorzugsweise eine zweite Authentifizierungsinformation zurück, die der ersten Authentifizierungsinformation entspricht. Anhand der Identifikationsinformation, z.B. Teil des Bluetooth-Gerätenamens, wird dem zweiten Kommunikationsgerät 2 übermittelt, welcher Benutzer A sich einloggt. Das zweite Kommunikationsgerät 2 wird demnach so konfiguriert, dass der Benutzer A eine Anwendung auf dem zweiten Kommunikationsgerät 2 ausführen kann, ohne nochmals dafür eine Authentifizierungsinformation eingeben zu müssen. Damit nimmt das zweite Kommunikationsgerät 2 beispielsweise eine Rolle gemäß dem Benutzer A an, die ihm durch die Identifikationsinformation des ersten Kommunikationsgeräts 1 mitgeteilt wird. So kann beispielsweise ein Server oder eine Datenbank mit dem zweiten Kommunikationsgerät 2 verbunden sein, wo Identifikationsinformationen und zugehörige Sicherheitsinformationen gespeichert sind oder verwaltet werden. Ein Server oder eine Datenbank kann dabei separat oder als Teil des zweiten Kommunikationsgeräts 2 gestaltet sein. Das zweite Kommunikationsgerät 2 erkennt somit anhand des Bluetooth-Gerätenamens des ersten Kommunikationsgeräts 1 welcher Benutzer A sich auf dem zweiten Kommunikationsgerät 2 authentifizieren und z.B. eine Anwendung ausführen will.

Das erste Kommunikationsgerät 1 und das zweite Kommunikationsgerät 2 werden im nächsten Schritt 204 mittels der ersten und zweiten Authentifizierungsinformation wechselseitig authentifiziert, wenn mindestens ein Teil der ersten Authentifizierungsinformation mit einem Teil der zweiten Authentifizierungsinformation übereinstimmt und eine Bluetooth-Verbindung hergestellt wird. Insbesondere kann ein Teil der Authentifizierungsinformation jeweils eine Sicherheitsinformation wie ein Passwort sein, so dass die Authentifizierung erfolgreich ist, wenn das erste Passwort mit dem zweiten Passwort übereinstimmt.

Zum Aufbau der Bluetooth-Verbindung wird beispielsweise eines der bekannten Authentifizierungsprotokolle für Bluetooth, wie z.B. das "Passkey Entry" Protokoll, verwendet. Die Authentifizierung 204 gemäß diesem Protokoll erfolgt über eine applikationsspezifische erste Authentifizierungsinformation, die beispielsweise vom Benutzer A abhängen kann.

Die erste Authentifizierungsinformation wird folglich für die Authentifizierung genutzt, worauf eine verschlüsselte Verbindung mittels Austausch von öffentlichen Schlüsseln gemäß dem Diffie-Hellman-Verfahren hergestellt wird. Die "Passkey Entry" Protokoll-Methode basiert vorzugsweise dabei auf der Eingabe einer persönliche Identifikationsnummer, oder kurz PIN, zur Authentifizierung und einem kryptografischen Schlüsselaustauschverfahren gemäß dem Diffie-Hellman-Verfahren zur anschließenden Verschlüsselung der Verbindung.

Bei erfolgreicher Authentifizierung 205 wird die Bluetooth-Verbindung zwischen der ersten Schnittstelle 13 des ersten Kommunikationsgeräts 1 und der zweiten Schnittstelle 23 des zweiten Kommunikationsgeräts 2 aufgebaut. Die Authentifizierung ist erfolgreich, wenn die erste Authentifizierungsinformation mit der zweiten Authentifizierungsinformation übereinstimmt. Die Verbindung wird kryptografisch geschützt. Ist die Authentifizierung nicht erfolgreich, wird keine Verbindung hergestellt und es kann eine erneute Verbindungsanfrage übermittelt werden.

Das erste Kommunikationsgerät 1 und das zweite Kommunikationsgerät sind demnach über Bluetooth verbunden und es können über die Bluetooth-Verbindung Daten ausgetauscht werden 206. Da das zweite Kommunikationsgerät 2 bereits den Benutzer A des ersten Kommunikationsgeräts 1 kennt und der Benutzer A im ersten Kommunikationsgerät 1 bereits das Benutzer-Passwort eingegeben hat, erfolgt eine Authentifizierung des Benutzers im zweiten Kommunikationsgerät 2 direkt bzw. gleichzeitig mit der Authentifizierung der Bluetooth-Verbindung. Es ist für den Datenaustausch kein weiterer Authentifizierungsschritt erforderlich. Bei Nichtübereinstimmung der Sicherheitsinformation der ersten Authentifizierungsinformation mit der Sicherheitsinformation der zweiten Authentifizierungsinformation wird die Bluetooth-Verbindung nicht aufgebaut.

Mit dem beschriebenen Verfahren kann ein Benutzer A ein Feldgerät über Bluetooth steuern, wobei insbesondere einmalig eine Authentifizierungsinformation in das Gerät des Benutzers A, z.B. ein Tablet, eingegeben werden muss. Es ist folglich eine schnelle und einfache Authentifizierung eines ersten Kommunikationsgeräts bei einem zweiten Kommunikationsgerät für verschiedene Benutzer A möglich.

Das Sequenzdiagramm von Figur 2 zeigt ein weiteres Ausführungsbeispiel des erfindungsgemäßen Verfahrens. Bei diesem Ausführungsbeispiel kann das zweite Kommunikationsgerät 2 verschiedene Rollen annehmen oder verschiedene Benutzer A können das erste Kommunikationsgerät benutzen oder verschiedene Applikationen können darauf laufen. Die einzelnen Verfahrensschritte in diesem Ausführungsbeispiel sind nachfolgend beschrieben.

Das erste Kommunikationsgerät 1 mit erster Bluetooth-Schnittstelle 13 stellt eine erste Authentifizierungsinformation bereit 200. Beispielsweise gibt ein Benutzer A eine Sicherheitsinformation, z.B. ein Passwort, ein. Das zweite Kommunikationsgerät 2 kann beispielsweise verschiedene Rollen annehmen. Eine Bluetooth-Verbindung kann gemäß dem erfindungsgemäßen Verfahren insbesondere dann aufgebaut werden, wenn das erste Kommunikationsgerät 1 und das zweite Kommunikationsgerät 2 eine übereinstimmende Authentifizierungsinformation bereitstellen, wobei diese z.B. vom Benutzer A abhängig ist.

Im gezeigten Ausführungsbeispiel in Figur 2 nimmt das zweite Kommunikationsgerät 2 im Schritt 301 zunächst eine Rolle an, die einem anderen Benutzer als dem Benutzer A des ersten Kommunikationsgeräts 1 entspricht. Das zweite Kommunikationsgerät 2 stellt des Weiteren in diesem Schritt eine zweite Authentifizierungsinformation bereit, die zur angenommen Rolle gehört. Außerdem wird der Bluetooth-Gerätename des zweiten Kommunikationsgeräts 2 entsprechend der angenommenen Rolle konfiguriert.

Wenn das erste Kommunikationsgerät 1 einen Bluetooth-Scan durchführt 302, kann es das zweite Kommunikationsgerät 2 detektieren. Anhand des Bluetooth-Gerätenamens des zweiten Kommunikationsgeräts 2 erkennt das erste Kommunikationsgerät 1, welche Rolle das zweite Kommunikationsgerät angenommen hat. Wenn aber der Benutzer A des ersten Kommunikationsgeräts 1 nicht mit der Rolle des zweiten Kommunikationsgeräts 2 übereinstimmt, kann kein Bluetooth-Verbindungsaufbau zustande kommen. Es kann keine wechselseitige Authentifizierung durchgeführt werden, da die erste Authentifizierungsinformation des ersten Kommunikationsgeräts 1 nicht mit der des zweiten Kommunikationsgeräts 2 übereinstimmt.

Im Schritt 303 wechselt das zweite Kommunikationsgerät 2 seine Rolle und nimmt die Rolle an, die zum Benutzer A des ersten Kommunikationsgeräts 2 passt. Es kann dabei beispielsweise der Bluetooth-Gerätename des zweiten Kommunikationsgerätes 2 dynamisch beim Wechseln der Rolle angepasst werden.

Bei einem erneuten Bluetooth-Scan 304 des ersten Kommunikationsgeräts 1 wird das zweite Kommunikationsgerät 2 erfasst. Da nun die im Bluetooth-Gerätenamen des zweiten Kommunikationsgeräts 2 übermittelte Rolle zum Benutzer A des ersten Kommunikationsgeräts 1 passt, kann die Bluetooth-Kopplung durchgeführt werden.

Das erste Kommunikationsgerät 1 stellt eine Anfrage zum Bluetooth-Verbindungsaufbau 202 an das zweite Kommunikationsgerät 2. Das zweite Kommunikationsgerät 2 stellt die zweite Authentifizierungsinformation bereit 203. Mittels eines Authentifizierungsprotokolls, wie z.B. das "Passkey Entry Protocol", wird die Bluetooth-Verbindung anhand der ersten und zweiten Authentifizierungsinformation authentifiziert 204.

Wenn die Authentifizierung erfolgreich ist, d.h. wenn die Authentifizierungsinformation des ersten Kommunikationsgerätes 1 mit der Authentifizierungsinformation des zweiten Kommunikationsgerätes 2 übereinstimmt, kann die Bluetooth-Verbindung hergestellt werden 205. Es wird an die jeweilige Schnittstelle zurückgemeldet, dass die Authentifizierung erfolgreich ist.

Es werden vom ersten Kommunikationsgerät 1 über die Bluetooth-Verbindung Daten an das zweite Kommunikationsgerät 2 übertragen 206. Die Datenübertragung kann beispielsweise durch eine Anwendung angestoßen werden, mit der das erste Kommunikationsgerät 1 das zweite Kommunikationsgerät 2 via Bluetooth steuert. Eine erneute Authentifizierung der Datenübertragung auf Applikationsebene ist nicht erforderlich, die Authentifizierung der Bluetooth-Verbindung schließt diese Authentifizierung ein.

Das erfindungsgemäße Verfahren ermöglicht folglich einen benutzerfreundlichen Verbindungsaufbau via Bluetooth zwischen mindestens zwei Kommunikationsgeräten. Es müssen für eine sichere Bluetooth-Verbindung keine Sicherheitsinformationen, z.B. Bluetooth-Passwörter, konfiguriert oder verteilt werden.

Die Authentifizierung der Bluetooth-Verbindung erfolgt auf der Basis einer bereits existierenden applikationsspezifischen oder benutzerspezifischen Authentifizierungsinformation.

Das zweite Kommunikationsgerät, z.B. ein Feldgerät, kann beispielsweise seine aktuell aktive Benutzerrolle für einen Pairing-Prozess in einem Zeitintervall wechseln und die aktuell aktive Rolle dem ersten Kommunikationsgerät über seinen Bluetooth-Gerätenamen signalisiert, z.B. in dem an den Gerätenamen eine Benutzer/Rolleninformation angehängt wird. Neben dem Gerätenamen können auch andere im Bluetooth-Chip konfigurierbare Informationen zur Codierung eines Benutzers oder einer Rolle genutzt werden, wenn diese auf Sendeseite sichtbar sind. Das erste Kommunikationsgerät 1, das sich mit dem Feldgerät verbinden möchte, wartet so lange, bis die erwünschte Rolle beim Scannen der Bluetooth-Geräte bzw. während des Pairings signalisiert wird. Dadurch ist sichergestellt, dass das Feldgerät die korrekte Authentifizierungsinformation zur Verifikation nutzt.

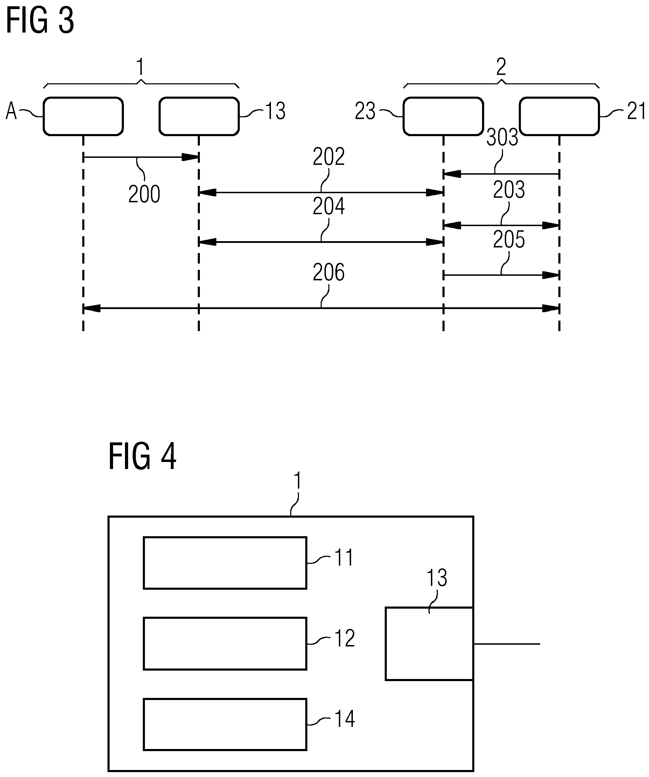

In einem dritten Ausführungsbeispiel des Verfahrens, wie in Figur 3 gezeigt, kann das erfindungsgemäße Verfahren genutzt werden, um zwei Kommunikationsgeräte über Bluetooth miteinander zu verbinden und dabei eine authentifizierte Datenübertragung zu ermöglichen, ohne dass die Kommunikationsgeräte ihre Bluetooth-Gerätenamen zu ändern brauchen. In einem anderen Fall können die Bluetooth-Gerätenamen fest vorgegeben sein. Die Verfahrensschritte in diesem Ausführungsbeispiel sind gemäß dem ersten Ausführungsbeispiel in Figur 1 realisiert, wobei aber das erste Kommunikationsgerät 1 keine Identifikationsinformation über den Benutzer A bereitstellt, wie z.B. als Teil des Bluetooth-Gerätenamens. Ein Verbindungsaufbau über Bluetooth kann nur initialisiert werden, wenn die Eingabe der ersten Authentifizierungsinformation, insbesondere der Sicherheitsinformation, des ersten Kommunikationsgeräts 1 zu der zweiten Authentifizierungsinformation, insbesondere der Sicherheitsinformation, des zweiten Kommunikationsgeräts 2 passt. Insbesondere kann die Sicherheitsinformation des ersten Kommunikationsgeräts fest vorgegeben sein. In anderen Worten, das erste Kommunikationsgerät 1 versucht sich mit dem zweiten Kommunikationsgerät 2 zu verbinden, wobei ihm die Rolle des zweiten Kommunikationsgerät 2 nicht bekannt ist. Folglich können beliebig viele Verbindungsanfragen des ersten Kommunikationsgeräts 1 an das zweite Kommunikationsgerät 2 übermittelt werden, Schritt 203, bis eine Übereinstimmung der ersten Authentifizierungsinformation mit der zweiten Authentifizierungsinformation erreicht ist.

Mit einer Pairing-Anfrage nimmt beispielsweise eine Applikation auf dem Feldgerät einen erwarteten Benutzer oder Rolle an und gibt der Bluetooth-Schnittstelle eine entsprechende PIN zurück. Für das Feldgerät können beispielsweise verschiedene vorkonfigurierte Benutzerrollen oder Benutzerprofile in einer Datenbank gespeichert sein. Schlägt das Pairing fehl war die Annahme falsch und die Applikation wird über den fehlerhaften Versuch informiert. Der anfragende Benutzer A startet eine erneute Pairing-Anfrage und die Applikation auf dem Feldgerät übergibt eine andere Benutzer/Rollen-PIN an die Bluetooth-Schnittstelle. Dies wird solange wiederholt, bis ein Bluetooth-Pairing erfolgreich durchgeführt werden konnte. Der erfolgreiche Aufbau wird der Applikation auf dem Feldgerät mitgeteilt und kann die Verbindung der entsprechenden Rolle zuordnen.

Bei diesem Ausführungsbeispiel in Figur 3 können folglich korrekte Anmeldungen eines Benutzers A zu Fehlversuchen führen, wenn die Authentifizierungsinformation von beiden Seiten nicht übereinstimmt. Um dieses beispielhafte Verfahren effizient zu erweitern, kann die zweite Authentifizierungsinformation geordnet in einer Liste vorliegen. Beispielsweise kann eine Liste von hierarchisch nach Privilegierungslevel geordneten Passwörtern vorliegen, die in dieser Reihenfolge durchprobiert werden. Beispielsweise können Passwörter eines Benutzers, eines Servicemitarbeiters und eines Administrators durchprobiert werden und nach einer erfolgreichen Anmeldung an einer Rolle auch die Fehlbedienungszähler aller niedriger privilegierten Rollen zurückgesetzt werden.

Bei nicht korrekter Übereinstimmung wird eine erneute Verbindungsanfrage gestellt. Die nicht verwendeten Authentifizierungsinformationen werden dabei vorzugsweise nicht gesperrt. In einer anderen Variante werden die nicht verwendeten Authentifizierungsinformationen, z.B. zur Sicherheit, gesperrt.

Figur 4 zeigt eine schematische Darstellung eines erfindungsgemäßen ersten Kommunikationsgeräts 1. Das erste Kommunikationsgerät 1 umfasst eine erste Authentifizierungseinheit 11, eine erste Kommunikationseinheit 12 und eine erste Schnittstelle 13. Die Authentifizierungseinheit 11 kann eine erste Authentifizierungsinformation, die mindestens eine Identifikationsinformation und eine Sicherheitsinformation umfasst, für die Bluetooth-Kopplung bereitstellen. Die erste Kommunikationseinheit 12 dient zur Kommunikation mit mindestens einem zweiten Kommunikationsgerät 2 und kann eine Anfrage zum Bluetooth-Verbindungsaufbau übermitteln. Die erste Bluetooth-Schnittstelle 13 kann einen Endpunkt einer Bluetooth-Verbindung darstellen. Bei einer erfolgreichen wechselseitigen Authentifizierung des ersten Kommunikationsgeräts 1 und des zweiten Kommunikationsgeräts 2, baut die Bluetooth-Schnittstelle 13 die Verbindung auf, über die Daten mit dem anderen Gerät ausgetauscht werden können. Die Authentifizierung für die Datenübertragung, beispielsweise eine Benutzerauthentifizierung für eine Applikation, erfolgt dabei auf Applikationsebene gleichzeitig oder implizit mit der Authentifizierung der Bluetooth-Verbindung. Des Weiteren kann das erste Kommunikationsgerät 1 weitere Komponenten umfassen, wie z.B. einen Prozessor 14 für die Umsetzung des Authentifizierungsverfahrens. Alle Komponenten können vorteilhaft miteinander verbunden sein.

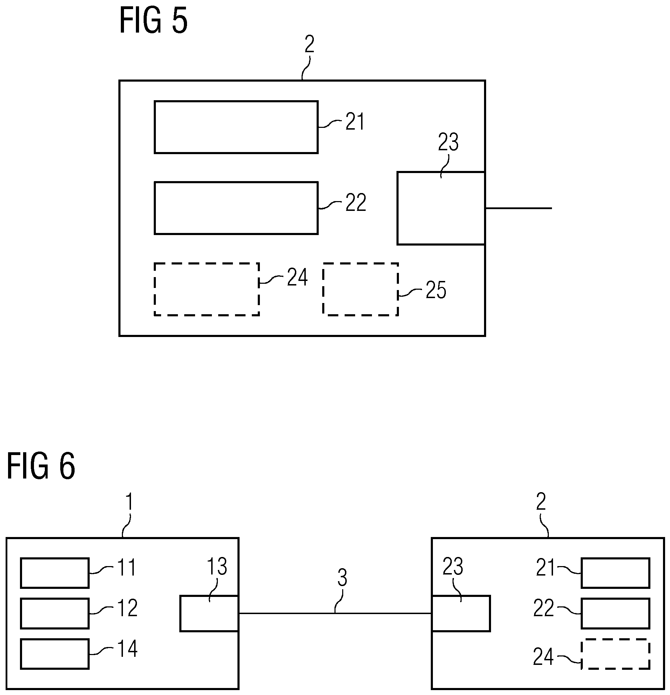

Figur 5 zeigt in schematischer Darstellung ein Ausführungsbeispiel des erfindungsgemäßen zweiten Kommunikationsgeräts 2 umfassend eine zweite Authentifizierungseinheit 21, eine zweite Kommunikationseinheit 22 und eine zweite Schnittstelle 23. Die zweite Authentifizierungseinheit 21 stellt eine zweite Authentifizierungsinformation bereit. Insbesondere wenn mindestens ein Teil dieser zweiten Authentifizierungsinformation mit mindestens einem Teil der ersten Authentifizierungsinformation des ersten Kommunikationsgeräts 1 übereinstimmt, kann eine Bluetooth-Verbindung zwischen diesen beiden Geräten aufgebaut werden. Die zweite Kommunikationseinheit 22 kann eine Anfrage zum Bluetooth-Verbindungsaufbau von einem ersten Kommunikationsgerät 1 empfangen. Die zweite Schnittstelle 23 ist folglich ein zweiter Endpunkt der Bluetooth-Verbindung, die zwischen dieser und der ersten Bluetooth-Schnittstelle 13 des ersten Kommunikationsgeräts 1 aufgebaut wird und über die eine Datenübertragung durchgeführt werden kann. Das zweite Kommunikationsgerät 2 kann weitere Komponenten umfassen, wie z.B. einen Prozessor 24 und eine Datenbank 25, in der mindestens eine zweite Authentifizierungsinformation gespeichert ist. Alle Komponenten können vorteilhaft miteinander verbunden sein.

Das erste Kommunikationsgerät 1 und das zweite Kommunikationsgerät 2 können beispielsweise noch weitere, zusätzliche Einheiten umfassen. Beispielsweise kann das erste Kommunikationsgerät eine Eingabemöglichkeit, wie z.B. eine Tastatur, umfassen. Des Weiteren kann eine Anzeigeeinheit, wie z.B. ein Display, vorhanden sein. Rechenintensive Berechnungen für die Authentifizierung können beispielsweise in der Hardware, z.B. einer CPU, der ersten Schnittstelle des ersten Kommunikationsgeräts 1 und/oder der zweiten Schnittstelle des zweiten Kommunikationsgeräts 2 durchgeführt werden, so dass sich die Anforderungen an die Leistung der jeweiligen CPU nicht erhöhen. Somit ist die Erfindung leicht in bereits bestehende Feldgeräte, die oftmals nicht die nötigen Ressourcen aufweisen, integrierbar.

Figur 6 zeigt in schematischer Darstellung das erfindungsgemäße System umfassend ein erstes Kommunikationsgerät 1 und ein zweites Kommunikationsgerät 2, wie oben beispielhaft beschrieben, um das beschriebene Verfahren durchzuführen. Die beiden Kommunikationsgeräte sind miteinander über eine drahtlose Kommunikationsverbindung 3, z.B. über Bluetooth, verbunden, wenn eine wechselseitige Authentifizierung der beiden Kommunikationsgeräte 1 und 2 gemäß dem Verfahren erfolgreich ist.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur drahtlosen Kommunikation eines ersten Kommunikationsgeräts (1) mit einem zweiten Kommunikationsgerät (2), mit den Verfahrensschritten:
- Bereitstellen (200) einer ersten Authentifizierungsinformation vom ersten Kommunikationsgerät (1), wobei die erste Authentifizierungsinformation für eine Authentifizierung eines Benutzers, einer Rolle oder einer Anwendung gültig ist,
- Übermitteln (202) einer Anfrage zu einem Bluetooth-Verbindungsaufbau vom ersten Kommunikationsgerät (1) an das zweite Kommunikationsgerät (2),
- Authentifizieren und Herstellen (204) einer Bluetooth-Verbindung mittels der ersten Authentifizierungsinformation und einer zweiten Authentifizierungsinformation, die vom zweiten Kommunikationsgerät (2) bereitgestellt wird, wenn mindestens ein Teil der ersten Authentifizierungsinformation mit einem Teil der zweiten Authentifizierungsinformation übereinstimmt (205)
und
- Aufbauen der Datenübertragung (206) zwischen dem ersten Kommunikationsgerät (1) und dem zweiten Kommunikationsgerät (2) über die Bluetooth-Verbindung, wobei die Authentifizierung der Bluetooth-Verbindung die Authentifizierung eines Benutzers, einer Rolle oder einer Anwendung am zweiten Kommunikationsgerät (2) einschließt.

2. Verfahren nach Anspruch 1, wobei die erste Authentifizierungsinformation und die zweite Authentifizierungsinformation jeweils mindestens eine Identifikationsinformation und eine Sicherheitsinformation umfassen.

3. Verfahren nach einem der vorangehenden Ansprüche, wobei die zweite Authentifizierungsinformation in einer Datenbank gespeichert wird.

4. Verfahren nach einem der vorangehenden Ansprüche, wobei die erste Identifikationsinformation des ersten Kommunikationsgeräts (1) dem zweiten Kommunikationsgerät (2) vor oder während des Bluetooth-Verbindungsaufbaus übermittelt wird und das zweite Kommunikationsgerät (2) anhand der Identifikationsinformation der ersten Authentifizierungsinformation eine zweite Authentifizierungsinformation bereitstellt.

5. Verfahren nach einem der Ansprüche 1 bis 3, wobei die zweite Identifikationsinformation der zweiten Authentifizierungsinformation des zweiten Kommunikationsgeräts (2) dem ersten Kommunikationsgerät (1) übermittelt wird und das erste Kommunikationsgerät (1) anhand der Identifikationsinformation eine erste Authentifizierungsinformation bereitstellt.

6. Verfahren nach einem der Ansprüche 1 bis 3, wobei die Sicherheitsinformation der ersten Authentifizierungsinformation fest vorgegeben ist und die Bluetooth-Verbindung authentifiziert und hergestellt wird, sobald eine Sicherheitsinformation der zweiten Authentifizierungsinformation mit der Sicherheitsinformation der ersten Authentifizierungsinformation übereinstimmt.

7. Verfahren nach einem der vorangehenden Ansprüche, wobei bei einer Nichtübereinstimmung der Sicherheitsinformation der ersten Authentifizierungsinformation mit der Sicherheitsinformation der zweiten Authentifizierungsinformation die Bluetooth-Verbindung nicht aufgebaut und eine erneute Anfrage zu einem Bluetooth-Verbindungsaufbau übermittelt wird.

8. Erstes Kommunikationsgerät (1) umfassend:
- eine erste Authentifizierungseinheit (11), die derart ausgebildet ist, eine erste Authentifizierungsinformation bereitzustellen, wobei die erste Authentifizierungsinformation für eine Authentifizierung eines Benutzers, einer Rolle oder einer Anwendung gültig ist,
- eine erste Kommunikationseinheit (12), die derart ausgebildet ist, eine Anfrage zu einem Bluetooth-Verbindungsaufbau an ein zweites Kommunikationsgerät (2) zu übermitteln,
- eine erste Schnittstelle (13), die derart ausgebildet ist eine Bluetooth-Verbindung zum zweiten Kommunikationsgerät (2) zu authentifizieren und herzustellen, wenn mindestens ein Teil der ersten Authentifizierungsinformation mit einem Teil der zweiten Authentifizierungsinformation, die vom zweiten Kommunikationsgerät (2) bereitgestellt wird, übereinstimmt, und eine Datenübertragung zum zweiten Kommunikationsgerät (2) aufzubauen, wobei die Datenübertragung über die Bluetooth-Verbindung erfolgt und wobei die Authentifizierung der Bluetooth-Verbindung die Authentifizierung eines Benutzers, einer Rolle oder einer Anwendung am zweiten Kommunikationsgerät (2) einschließt.

9. Zweites Kommunikationsgerät (2) umfassend:
- eine zweite Authentifizierungseinheit (21), die derart ausgebildet ist, eine zweite Authentifizierungsinformation bereitzustellen,
- eine zweite Kommunikationseinheit (22), die derart ausgebildet ist, eine Anfrage zum Bluetooth-Verbindungsaufbau von einem ersten Kommunikationsgerät (1) zu empfangen,
- eine zweite Schnittstelle (23), die derart ausgebildet ist eine Bluetooth-Verbindung zum ersten Kommunikationsgerät (1) zu authentifizieren und herzustellen, wenn mindestens ein Teil einer ersten Authentifizierungsinformation vom ersten Kommunikationsgerät (1), die für eine Authentifizierung eines Benutzers, einer Rolle oder einer Anwendung gültig ist, mit einem Teil der zweiten Authentifizierungsinformation übereinstimmt, und eine Datenübertragung zum ersten Kommunikationsgerät (1) aufzubauen.

10. Zweites Kommunikationsgerät (2) nach Anspruch 9 umfassend eine Datenbank (25), wobei die Datenbank (25) derart ausgebildet ist, mindestens eine zweite Authentifizierungsinformation zu speichern.

11. System zur drahtlosen Kommunikation eines ersten Kommunikationsgeräts (1) mit einem zweiten Kommunikationsgerät (2), umfassend:
- ein erstes Kommunikationsgerät (1) nach Anspruch 9,
- ein zweites Kommunikationsgerät (2) nach Anspruch 10,
- eine drahtlose Kommunikationsverbindung (3) über Bluetooth zwischen dem ersten Kommunikationsgerät (1) und dem zweiten Kommunikationsgerät (2).

12. Ein System nach Anspruch 11, das dazu ausgebildet ist, das Verfahren nach einem der Ansprüche 1 bis 7 durchzuführen.

13. Computerprogrammprodukt, das direkt in einen programmierbaren Computer ladbar ist, umfassend Programmcodeteile, die dazu geeignet sind, die Schritte des Verfahrens nach einem der Ansprüche 1 bis 7 durchzuführen.

## Claims

1. Method for wireless communication by a first communication device (1) with a second communication device (2), having the method steps of:
- providing (200) first authentication information by means of the first communication device (1), wherein the first authentication information is valid for authenticating a user, a role or an application,
- conveying (202) a request for setup of a Bluetooth connection from the first communication device (1) to the second communication device (2),
- authenticating and making (204) a Bluetooth connection by means of the first authentication information and second authentication information provided by the second communication device (2) if at least part of the first authentication information is concordant (205) with part of the second authentication information,
and
- setting up the data transmission (206) between the first communication device (1) and the second communication device (2) via the Bluetooth connection, wherein the authentication of the Bluetooth connection includes the authentication of a user, a role or an application on the second communication device (2).

2. Method according to Claim 1, wherein the first authentication information and the second authentication information each comprise at least identification information and security information.

3. Method according to either of the preceding claims, wherein the second authentication information is stored in a database.

4. Method according to one of the preceding claims, wherein the first identification information of the first communication device (1) is conveyed to the second communication device (2) before or during the setup of the Bluetooth connection and the second communication device (2) takes the identification information of the first authentication information as a basis for providing second authentication information.

5. Method according to one of Claims 1 to 3, wherein the second identification information of the second authentication information of the second communication device (2) is conveyed to the first communication device (1), and the first communication device (1) takes the identification information as a basis for providing first authentication information.

6. Method according to one of Claims 1 to 3, wherein the security information of the first authentication information is firmly prescribed and the Bluetooth connection is authenticated and made as soon as security information of the second authentication information is concordant with the security information of the first authentication information.

7. Method according to one of the preceding claims, wherein if the security information of the first authentication information is not concordant with the security information of the second authentication information, the Bluetooth connection is not set up and a fresh request for setup of a Bluetooth connection is conveyed.

8. First communication device (1) comprising:
- a first authentication unit (11) designed to provide first authentication information, wherein the first authentication information is valid for authenticating a user, a role or an application,
- a first communication unit (12) designed to convey a request for setup of a Bluetooth connection to a second communication device (2),
- a first interface (13) designed to authenticate and make a Bluetooth connection to the second communication device (2) if at least part of the first authentication information is concordant with part of the second authentication information provided by the second communication device (2), and to set up a data transmission to the second communication device (2), wherein the data transmission is effected via the Bluetooth connection and wherein the authentication of the Bluetooth connection includes the authentication of a user, a role or an application on the second communication device (2).

9. Second communication device (2) comprising:
- a second authentication unit (21) designed to provide second authentication information,
- a second communication unit (22) designed to receive a request for setup of a Bluetooth connection from a first communication device (1),
- a second interface (23) designed to authenticate and make a Bluetooth connection to the first communication device (1) if at least part of first authentication information from the first communication device (1), which authentication information is valid for authenticating a user, a role or an application, is concordant with part of the second authentication information, and to set up a data transmission to the first communication device (1).

10. Second communication device (2) according to Claim 9, comprising a database (25), wherein the database (25) is designed to store at least second authentication information.

11. System for wireless communication by a first communication device (1) with a second communication device (2), comprising:
- a first communication device (1) according to Claim 9,
- a second communication device (2) according to Claim 10,
- a wireless communication connection (3) via Bluetooth between the first communication device (1) and the second communication device (2).

12. System according to Claim 11, designed to perform the method according to one of Claims 1 to 7.

13. Computer program product loadable directly into a programmable computer, comprising program code parts suitable for performing the steps of the method according to one of Claims 1 to 7.

## Revendications

1. Procédé pour la communication sans fil d'un premier appareil de communication (1) avec un deuxième appareil de communication (2), comportant les étapes suivantes :
- mise à disposition (200) d'une première information d'authentification par le premier appareil de communication (1), la première information d'authentification étant valable pour une authentification d'un utilisateur, d'un rôle ou d'une application,
- transmission (202) d'une requête d'établissement de liaison Bluetooth du premier appareil de communication (1) au deuxième appareil de communication (2),
- authentification et établissement (204) d'une liaison Bluetooth au moyen de la première information d'authentification et d'une deuxième information d'authentification qui est mise à disposition par le deuxième appareil de communication (2) si au moins une partie de la première information d'authentification coïncide avec une partie de la deuxième information d'authentification (205)
et
- établissement de la transmission de données (206) entre le premier appareil de communication (1) et le deuxième appareil de communication (2) via la liaison Bluetooth, l'authentification de la liaison Bluetooth incluant l'authentification d'un utilisateur, d'un rôle ou d'une application au niveau du deuxième appareil de communication (2) .

2. Procédé selon la revendication 1, la première information d'authentification et la deuxième information d'authentification comprenant respectivement au moins une information d'identification et une information de sécurité.

3. Procédé selon l'une des revendications précédentes, la deuxième information d'authentification étant stockée dans une base de données.

4. Procédé selon l'une des revendications précédentes, la première information d'identification du premier appareil de communication (1) étant transmise au deuxième appareil de communication (2) avant ou pendant l'établissement de la liaison Bluetooth et le deuxième appareil de communication (2) fournissant une deuxième information d'authentification à l'aide de l'information d'identification de la première information d'authentification.

5. Procédé selon l'une des revendications 1 à 3, la deuxième information d'identification de la deuxième information d'authentification du deuxième appareil de communication (2) étant transmise au premier appareil de communication (1) et le premier appareil de communication (1) fournissant une première information d'authentification à l'aide de l'information d'identification.

6. Procédé selon l'une des revendications 1 à 3, l'information de sécurité de la première information d'authentification étant strictement prédéfini et la liaison Bluetooth étant authentifiée et établie dès qu'une information de sécurité de la deuxième information d'authentification coïncide avec l'information de sécurité de la première information d'authentification.

7. Procédé selon l'une des revendications précédentes, dans lequel, en cas de non-coïncidence de l'information de sécurité de la première information d'authentification avec l'information de sécurité de la deuxième information d'authentification, la liaison Bluetooth n'est pas établie et une nouvelle requête d'établissement de liaison Bluetooth est transmise.

8. Premier appareil de communication (1), comprenant :
- une première unité d'authentification (11) qui est conçue pour fournir une première information d'authentification, la première information d'authentification étant valable pour une authentification d'un utilisateur, d'un rôle ou d'une application,
- une première unité de communication (12) qui est conçue pour transmettre une requête d'établissement de liaison Bluetooth à un deuxième appareil de communication (2),
- une première interface (13) qui est conçue pour authentifier et établir une liaison Bluetooth vers le deuxième appareil de communication (2) si au moins une partie de la première information d'authentification coïncide avec une partie de la deuxième information d'authentification fournie par le deuxième appareil de communication (2), et pour établir une transmission de données vers le deuxième appareil de communication (2), la transmission de données se faisant via la liaison Bluetooth et l'authentification de la liaison Bluetooth incluant l'authentification d'un utilisateur, d'un rôle ou d'une application au niveau du deuxième appareil de communication (2) .

9. Deuxième appareil de communication (2), comprenant :
- une deuxième unité d'authentification (21) qui est conçue pour fournir une deuxième information d'authentification,
- une deuxième unité de communication (22) qui est conçue pour recevoir une requête d'établissement de liaison Bluetooth d'un premier appareil de communication (1),
- une deuxième interface (23) qui est conçue pour authentifier et établir une liaison Bluetooth vers le premier appareil de communication (1) si au moins une partie d'une première information d'authentification du premier appareil de communication (1), valable pour une authentification d'un utilisateur, d'un rôle ou d'une application, coïncide avec une partie de la deuxième information d'authentification, et pour établir une transmission de données vers le premier appareil de communication (1).

10. Deuxième appareil de communication (2) selon la revendication 9, comprenant une base de données (25), la base de données (25) étant conçue pour stocker au moins une deuxième information d'authentification.

11. Système de communication sans fil d'un premier appareil de communication (1) avec un deuxième appareil de communication (2), comprenant :
un premier appareil de communication (1) selon la revendication 9, un deuxième appareil de communication (2) selon la revendication 10, une liaison de communication sans fil (3) via Bluetooth entre le premier appareil de communication (1) et le deuxième appareil de communication (2) .

12. Un système selon la revendication 11, qui est conçu pour exécuter le procédé selon l'une des revendications 1 à 7.

13. Produit de programme informatique qui peut être chargé directement dans un ordinateur programmable, comprenant des parties de code de programme qui sont adaptées pour exécuter les étapes du procédé selon l'une des revendications 1 à 7.
